# EUROPÄISCHE PATENTSCHRIFT

(11) **EP 3 640 369 B1**
(45) Veröffentlichungstag und Bekanntmachung des Hinweises auf die Patenterteilung: **03.04.2024**
(21) Anmeldenummer: 19201111.2
(22) Anmeldetag: 02.10.2019
(51) Int. Cl.: B60Q 3/54, B60R 13/00, C23F 1/04, B44F 1/00, B44C 1/22, B23K 26/38

(54) **INNENAUSSTATTUNGSTEIL EINES FAHRZEUGES MIT EINEM METALLISCHEN FLÄCHENELEMENT UND VERFAHREN ZUR HERSTELLUNG DESSELBEN**
INTERIOR FITTING PART OF A VEHICLE WITH A METALLIC SURFACE ELEMENT AND METHOD FOR PRODUCING THE SAME
PIÈCE D'AMÉNAGEMENT INTÉRIEUR D'UN VÉHICULE DOTÉE D'UN ÉLÉMENT DE SURFACE MÉTALLIQUE ET PROCÉDÉ DE FABRICATION D'UNE TELLE PIÈCE

(30) Priorität: 18.10.2018 DE 102018125910
(43) Veröffentlichungstag der Anmeldung: 22.04.2020
(73) Patentinhaber: GRAMMER Interior Components GmbH, 74736 Hardheim (DE)
(72) Erfinder: Link, Manfred, 69427 Mudau-Reisenbach (DE)
(74) Vertreter: Ostriga Sonnet Wirths & Vorwerk

(56) Entgegenhaltungen:
- EP-A2- 2 866 462
- WO-A1-2015/086032
- WO-A1-2017/123747
- DE-A1- 10 208 674
- DE-A1-102011 082 344
- DE-U1-202015 009 357
- FR-A1- 2 826 608

## Beschreibung

Die Erfindung betrifft zunächst ein Innenausstattungsteil eines Fahrzeuges mit einem metallischen Flächenelement, welches mit wenigstens einer grafischen Ausgestaltung, wie Logo, Symbol, versehen ist, wobei die grafische Ausgestaltung als eine durch Materialabtragung entstandene Gravur ausgebildet ist und dass die Gravur mindestens teilweise eine aus einer Vielzahl von Bohrungen bestehende Mikroperforation aufweist.

Ein derartiges Innenausstattungsteil eines Fahrzeuges mit einem metallischen Flächenelement ist beispielsweise aus der DE 20 2015 009 357 U1 bekannt. Es wird ein metallisiertes Kunststoffbauteil offenbart, in welches eine durchleuchtbare Struktur eingebracht wird, wobei diese durch einen Bereich der Metallschicht gebildet ist, in dem mehrere lichtdurchlässige Öffnungen in einer Punktmatrix angeordnet sind. Zudem ist in der WO 2015/086032 A1 ein gattungsgemäßes Innenausstattungsteil beschrieben, welches unter anderem auch metallische Flächenelemente offenbart. In diese metallischen Flächenelemente wird mittels mechanischer oder chemischer Verfahren eine Materialabtragung verursacht, sodass eine Gravur um metallischen Flächenelement entsteht. In diese Gravur werden anschließend Bohrungen eingefügt.

Aus dem heterogenen Stand der Technik ist zudem beispielweise die DE 10 2011 082 344 A1 bekannt, welche eine optimierte Ausstrahlgeometrie bei hinterleuchteten, perforierten Dekorschichten offenbart. Die Mikroperforation wird in eine Teilfläche oder in die gesamte Fläche der Dekorschicht mittels Lasertechnik eingearbeitet.

Die WO 2017/123747 A1 offenbart eine Fahrzeugverkleidungskomponente bestehend aus einem Trägermaterial, welches von einer Schicht aus Mikroporen bedeckt ist, wobei hinter dem Trägermaterial eine Lichtquelle angeordnet ist, sodass das Licht durch die Mikroporen hindurch strahlen kann. Die Mikroporen sind derart angeordnet, dass diese einen vorbestimmte Form ergeben, welche dann außerhalb der Fahrzeugverkleidungskomponente zu erkennen ist.

Des Weiteren zeigt die FR 2 826 608 A1 ein Dekorelement aus einer mikroperforierte Metallfolie, welche auf einem Kunststoffbauteil aufgebracht und mit einer Klarlackschicht bedeckt ist.

In der EP 2 866 462 A2 ist eine Abdeckung aus einem metallischen Material gezeigt, welche aus einem perforierten Schallaustrittsbereich und einem Randbereich besteht, der einen Teil des Schallaustrittsbereichs umgebenden Rahmen ausbildet, wobei der Rahmen abschnittsweise ein Lochsegment mit Perforationslöchern umfasst.

Die aus dem Stand der Technik bekannten Lösungen haben einerseits den Nachteil, dass die grafischen Ausgestaltungen häufig nicht integraler Bestandteil des metallischen Flächenelements sind und andererseits, dass die Wirkung der grafischen Ausgestaltung sehr stark davon abhängig ist, dass ein ausreichendes Tageslicht vorhanden ist.

Die Aufgabe der Erfindung besteht deshalb darin, ein neues Innenausstattungsteil eines Fahrzeuges mit einem metallischen Flächenelement zu schaffen, bei der die grafische Ausgestaltung nicht die oben dargelegten Nachteile aufweist.

Die Lösung der Aufgabe ergibt sich aus den nachfolgenden Merkmalen des Anspruchs 1:
Innenausstattungsteil eines Fahrzeuges mit einem metallischen Flächenelement, welches mit wenigstens einer grafischen Ausgestaltung, wie Logo, Symbol, versehen ist, wobei die grafische Ausgestaltung als eine durch Materialabtragung entstandene Gravur ausgebildet ist und dass die Gravur mindestens teilweise eine aus einer Vielzahl von Bohrungen bestehende Mikroperforation aufweist, dadurch gekennzeichnet, dass die Bohrungen der Mikroperforation mit einem Durchmesser von 0,05 mm versehen und der Abstand der Bohrungen voneinander beträgt 0,05 mm.

Die erfindungsgemäße Lösung hat einerseits den großen Vorteil, dass die optische Wirkung bzw. Erkennbarkeit der grafischen Ausgestaltung bei Tag und bei Nacht völlig unabhängig von der tatsächlichen Lichtsituation ist.

Des Weiteren weist das erfindungsgemäße Innenausstattungsteil den Vorteil auf, dass die grafische Ausgestaltung integraler Bestandteil des das Innenausstattungsteil begrenzenden metallischen Flächenelementes ist.

Letztlich ist es auch von Vorteil, dass die Herstellung der erfindungsgemäßen grafischen Ausgestaltung in dem metallischen Flächenelement des Innenausstattungsteiles auf sehr einfache Weise mit bekannten Verfahren möglich ist.

Bei einer vorteilhaften Ausführungsform der Erfindung wird daher zum Beispiel die Gravur als Ätzgravur ausgestaltet.

Ebenso ist es auf einfache Weise möglich, dass die Mikroperforation der Gravur durch Laser hergestellt wird.

Erfindungsgemäß ist es letztlich auch möglich, dass die Gravur des metallischen Flächenelementes des Innenausstattungsteils hinterleuchtet ist. Grundsätzlich ist es auch möglich, dass die Gravur partiell mit unterschiedlich farblich ausgestaltetem Licht hinterleuchtet wird.

Des Weiteren bezieht sich die Erfindung auch auf ein Verfahren zur Herstellung einer grafischen Ausgestaltung eines metallischen Flächenelementes eines Innenausstattungsteils eines Fahrzeugs.

Ausgehend von dem oben bereits genannten Stand der Technik und der oben ebenfalls genannten Aufgabe ergibt sich die Lösung dieser Aufgabe aus den Merkmalen des nachfolgenden Anspruchs 5:
Verfahren zur Herstellung einer grafischen Ausgestaltung eines metallischen Flächenelements eines Innenausstattungsteils eines Fahrzeugs anhand Erstellung einer Gravur durch zumindest partielle Materialabtragung auf der Oberfläche des metallischen Flächenelements, gekennzeichnet durch folgenden Verfahrensschritt:
- Erzeugung einer mindestens partiellen, aus einer Vielzahl von Bohrungen bestehenden Mikroperforation im Bereich der Gravur, wobei die Bohrungen der Mikroperforation mit einem Durchmesser von 0,05 mm versehen und der Abstand der Bohrungen voneinander beträgt 0,05 mm.

Das erfindungsgemäße Verfahren hat ebenfalls den Vorteil, dass das auf einfache Weise mit grundsätzlich bekannten Arbeitsverfahren die erfindungsgemäße grafische Ausgestaltung in metallische Flächenelemente von Innenausstattungsteilen eingebracht werden kann.

In diesem Zusammenhang ist es von Bedeutung, dass beispielsweise die Mikroperforation lasergestützt erstellt werden kann.

Weitere Vorteile der Erfindung ergeben sich aus der nachfolgenden Beschreibung eines Ausführungsbeispiels. Es zeigen:
- Figur 1: eine Draufsicht auf einen Teilbereich eines metallischen Flächenelementes eines Innenausstattungsteils eines Fahrzeuges,
- Figur 2: eine Ausschnittsvergrößerung der grafischen Ausgestaltung gemäß des Kreisausschnitts II in Figur 1,
- Figur 3: einen Ausschnitt einer perspektivischen, dreidimensionalen Schrägansicht der grafischen Ausgestaltung und
- Figur 4: eine skizzenhafte Darstellung des metallischen Flächenelementes eines Innenausstattungsteils in Schnittdarstellung.

In den Zeichnungen ist ein Innenausstattungsteil eines Fahrzeuges mit einem metallischen Flächenelement insgesamt mit der Bezugsziffer 10 gekennzeichnet.

Das Innenausstattungsteil 10 weist ein metallisches Flächenelement 11 auf, welches mit einer grafischen Ausgestaltung 12 in Form beispielsweise der Marke GRAMMER 13 und einer Bildmarke 14 versehen ist.

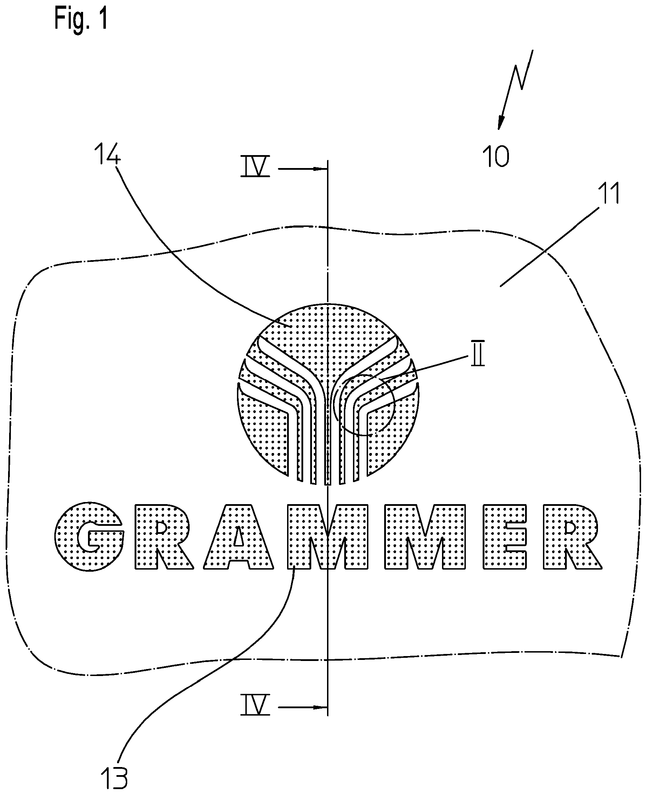

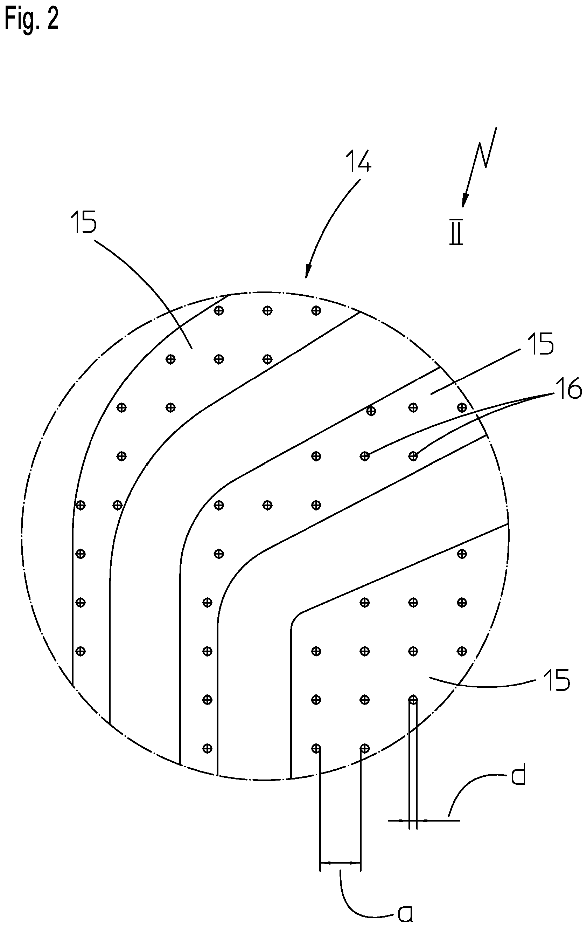

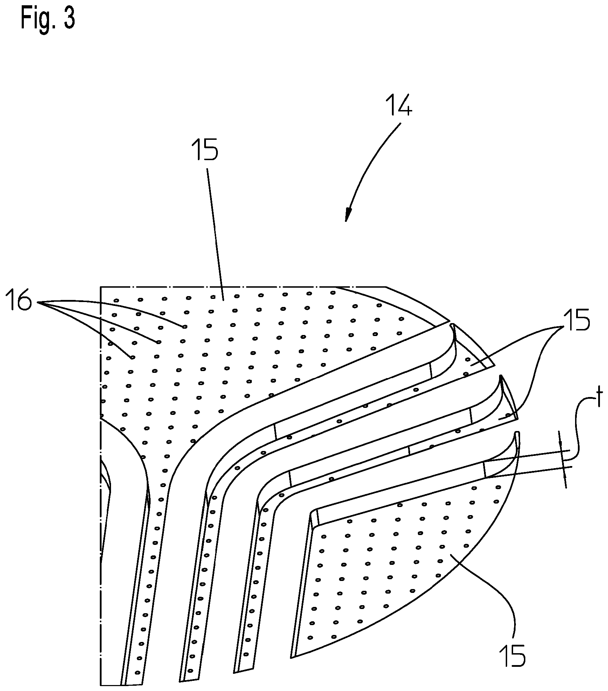

Aus der Zusammenschau der Figuren 1, 2 und 3 erkennt man, dass die grafische Ausgestaltung 12 in das metallische Flächenelement 11 mit einer Gravurtiefe t eingraviert worden ist. So weisen die Gravur der Bezeichnung GRAMMER 13 sowie die Bildmarke 14 gegenüber der Oberfläche des metallischen Flächenelements 11 abgesenkte Gravurbodenflächen 15 auf, die jeweils mit zahlreichen, gleich beabstandeten Bohrungen 16 einer Mikroperforation versehen sind. Gemäß dem Ausführungsbeispiel weisen die Bohrungen 16 einen Durchmesser d von 0,05 mm auf, wobei der Abstand a der Bohrungen 16 voneinander ebenfalls 0,05 mm beträgt.

Während die Gravur grundsätzlich vorzugsweise im Ätzverfahren hergestellt wird, kann die Mikroperforation nach der Erstellung der Gravur mit Hilfe von Lasern in die Gravurbodenfläche 15 eingearbeitet werden.

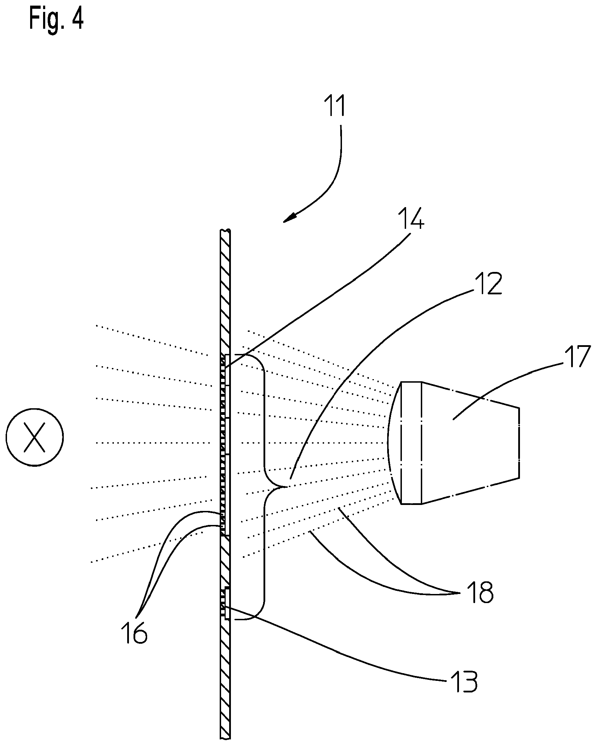

Letztlich zeigt die skizzenhafte Darstellung gemäß Figur 4 den Schnitt IV-IV durch ein metallisches Flächenelement 11 eines Innenausstattungsteils 10 eines Fahrzeuges, wobei die zum Betrachter x weisende grafische Ausgestaltung 12 durch eine im Innenausstattungsteil 10 angeordnete Leuchte 17 hinterleuchtet ist. Man erkennt, dass die beispielhaft eingezeichneten, von der Leuchte 17 ausgehenden Lichtstrahlen 18 die Bohrungen 16 der Mikroperforation durchdringen und für einen Betrachter x eine flächig beleuchtete grafische Ausgestaltung 12 erzeugen.

Auf vorteilhafte Weise ist bei Tageslicht die grafische Ausgestaltung 12 aufgrund der in das metallische Flächenelement 11 eingearbeitete Gravur optisch gut zu erkennen, während in der Dunkelheit durch die hinterleuchtete Gravurbodenflächen 15 die grafische Ausgestaltung 12 gut sichtbar ist.

### Bezugszeichenliste

- 10: Innenausstattungsteil
- 11: metallisches Flächenelement
- 12: grafische Ausgestaltung
- 13: Wortmarke GRAMMER
- 14: Bildmarke
- 15: Gravurbodenflächen
- 16: Bohrungen
- 17: Leuchte
- 18: Lichtstrahl
- x: Betrachter
- a: Abstand der Bohrungen 16 voneinander
- d: Durchmesser der Bohrungen 16
- t: Gravurtiefe

## Patentansprüche

1. Innenausstattungsteil (10) eines Fahrzeuges mit einem metallischen Flächenelement (11), welches mit wenigstens einer grafischen Ausgestaltung (12), wie Logo, Symbol, versehen ist, wobei die grafische Ausgestaltung (12) als eine durch Materialabtragung entstandene Gravur ausgebildet ist und dass die Gravur mindestens teilweise eine aus einer Vielzahl von Bohrungen (16) bestehende Mikroperforation aufweist, **dadurch gekennzeichnet, dass** die Bohrungen (16) der Mikroperforation jeweils einen Durchmesser von = 0,05 mm und einen Abstand der Bohrungen (16) voneinander von = 0,05 mm aufweisen.

2. Innenausstattungsteil (10) nach Anspruch 1, **dadurch gekennzeichnet, dass** die Gravur als Ätzgravur ausgestaltet ist.

3. Innenausstattungsteil (10) nach Anspruch 1 oder 2, **dadurch gekennzeichnet, dass** es sich um eine lasergestützte Mikroperforation handelt.

4. Innenausstattungsteil (10) nach einem der vorangehenden Ansprüche, **dadurch gekennzeichnet, dass** die Gravur hinterleuchtet ist.

5. Verfahren zur Herstellung einer grafischen Ausgestaltung (12) eines metallischen Flächenelements (11) eines Innenausstattungsteils (10) eines Fahrzeugs anhand Erstellung einer Gravur durch zumindest partielle Materialabtragung auf der Oberfläche des metallischen Flächenelements (11), **gekennzeichnet durch** folgenden Verfahrensschritt:
- Erzeugung einer mindestens partiellen, aus einer Vielzahl von Bohrungen (16) bestehenden Mikroperforation im Bereich der Gravur, wobei die Bohrungen (16) der Mikroperforation jeweils einen Durchmesser von = 0,05 mm und einen Abstand der Bohrungen (16) voneinander von = 0,05 mm aufweisen.

6. Verfahren nach Anspruch 5, **gekennzeichnet dadurch, dass** die Mikroperforation lasergestützt erstellt wird.

## Claims

1. Interior fitting part (10) of a vehicle, having a metallic surface element (11) which is provided with at least one graphic design (12), such as a logo, symbol, wherein the graphic design (12) is formed as an engraving made by material removal, and that the engraving has at least one partial micro perforation consisting of a plurality of bores (16), **characterised in that** the bores (16) of the micro perforation each have a diameter of = 0.05 mm and the bores (16) have a distance from each other of = 0.05 mm.

2. Interior fitting part (10) according to claim 1, **characterised in that** the engraving is designed as an etching.

3. Interior fitting part (10) according to claim 1 or 2, **characterised in that** it is a laser-assisted micro perforation.

4. Interior fitting part (10) according to one of the preceding claims, **characterised in that** the engraving is back-lit.

5. Method for producing a graphic design (12) of a metallic surface element (11) of an interior fitting part (10) of a vehicle through creation of an engraving by at least partial material removal on the surface of the metallic surface element (11), **characterised by** the following method step:
- creation of one at least partial micro perforation consisting of a plurality of bores (16) in the region of the engraving, wherein the bores (16) of the micro perforation each have a diameter of = 0.05 mm and the bores (16) have a distance from each other of = 0.05 mm.

6. Method according to claim 5, **characterised in that** the micro perforation is created with laser assistance.

## Revendications

1. Pièce d'aménagement intérieur (10) d'un véhicule comprenant un élément de surface métallique (11) qui est pourvu d'au moins une réalisation graphique (12), telle qu'un logo ou un symbole, dans laquelle la réalisation graphique (12) est conçue sous la forme d'une gravure obtenue par enlèvement de matière, et dans laquelle la gravure présente au moins partiellement une microperforation constituée d'une pluralité de perçages (16), **caractérisée en ce que** les perçages (16) de la microperforation présentent chacun un diamètre = 0,05 mm et une distance mutuelle entre les perçages (16) = 0,05 mm.

2. Pièce d'aménagement intérieur (10) selon la revendication 1, **caractérisée en ce que** la gravure est réalisée sous la forme d'une gravure industrielle.

3. Pièce d'aménagement intérieur (10) selon la revendication 1 ou 2, **caractérisée en ce que** la microperforation est une microperforation assistée par laser.

4. Pièce d'aménagement intérieur (10) selon l'une quelconque des revendications précédentes, **caractérisée en ce que** la gravure est rétroéclairée.

5. Procédé de fabrication d'une réalisation graphique (12) d'un élément de surface métallique (11) d'une pièce d'aménagement intérieur (10) d'un véhicule au moyen de la réalisation d'une gravure par un enlèvement au moins partiel de matière à la surface de l'élément de surface métallique (11), **caractérisé par** l'étape de procédé suivante :
- la production d'une microperforation au moins partielle, constituée d'une pluralité de perçages (16), dans la région de la gravure, dans lequel les perçages (16) de la microperforation présentent chacun un diamètre = 0,05 mm et une distance mutuelle entre les perçages (16) = 0,05 mm.

6. Procédé selon la revendication 5, **caractérisé en ce que** la microperforation est assistée par laser.
